# EUROPEAN PATENT SPECIFICATION

(11) **EP 3 170 734 B1**
(45) Date of publication and mention of the grant of the patent: **18.12.2019**
(21) Application number: 15821674.7
(22) Date of filing: 03.04.2015
(51) Int. Cl.: B63H 21/21, B63H 21/38, F02D 19/06, F02M 21/02, B63B 25/16, F02D 25/04, F02D 41/00

(54) **METHOD FOR OPERATING ENGINE FOR VESSEL**
VERFAHREN ZUM BETRIEB EINES MOTORS EINES SCHIFFES
PROCÉDÉ SERVANT AU FONCTIONNEMENT D'UN MOTEUR DESTINÉ À UN NAVIRE

(30) Priority: 18.07.2014 KR 20140090945; 23.07.2014 KR 20140093223; 29.09.2014 KR 20140130209; 29.09.2014 KR 20140130210; 09.02.2015 KR 20150019185
(43) Date of publication of application: 24.05.2017
(73) Proprietor: Daewoo Shipbuilding & Marine Engineering Co., Ltd., Seoul 100-180 (KR)
(72) Inventor: NAM, Byung Tak, Geoje-si Gyeongsangnam-do 656-903 (KR); KWON, Kyung Jin, Geoje-si Gyeongsangnam-do 656-806 (KR)
(74) Representative: Intès, Didier Gérard André
(86) International application number: PCT/KR2015/003369
(87) International publication number: WO 2016/010232

(56) References cited:
- WO-A1-2014/076995
- WO-A1-2014/077002
- KR-A- 20100 053 007
- KR-A- 20110 128 079
- KR-A- 20140 058 477
- US-A- 5 033 416
- US-A1- 2006 266 255
- US-A1- 2013 158 848
- US-B2- 7 431 005

## Description

### [Technical Field]

The present invention relates to an engine operating method for a ship including an engine fueled by natural gas and fuel oil at the same time.

### [Background Art]

Generally, natural gas is liquefied and transported over a long distance in the form of liquefied natural gas (LNG). Liquefied natural gas is obtained by cooling natural gas to a very low temperature of about -163°C at an atmospheric pressure and is well suited to long-distance transportation by sea because the volume thereof is significantly reduced, as compared with natural gas in a gaseous state.

Even when a liquefied natural gas storage tank is insulated, there is a limit to completely blocking external heat. Thus, liquefied natural gas is continuously vaporized in the liquefied natural gas storage tank by heat transferred into the storage tank. Liquefied natural gas vaporized in the storage tank is referred to as boil-off gas (BOG).

If the pressure in the storage tank exceeds a predetermined safe pressure due to generation of boil-off gas, the boil-off gas is discharged from the storage tank through a safety valve. The boil-off gas discharged from the storage tank is used as fuel for a ship, or is re-liquefied and returned to the storage tank.

US2013158848 (A1) relates to a fuel optimizing system for engines using more than one fuel.

KR20140058477 (A) discloses a floating structure with a propulsion system using heterogeneous fuel to float on the sea.

### [Disclosure]

### [Technical Problem]

It is an aspect of the present invention to provide an efficient engine operating method for a ship including engines fueled by natural gas and fuel oil at the same time.

### [Technical Solution]

The present invention relates to an engine operating method according to claim 1. In accordance with one aspect of the present disclosure, there is provided an engine operating method for a ship including engines operable using natural gas and fuel oil at the same time, wherein each of the engines is operated in any one of a gas mode in which each of the engines is driven using natural gas as a fuel, a fuel oil mode in which each of the engines is driven using fuel oil as a fuel, and a fuel sharing mode in which each of the engines is driven using natural gas and fuel oil at the same time.

Each of the engines may be operated in the fuel sharing mode through a process including: switching the engine to the fuel sharing mode; determining proportion of gas burned in the fuel sharing mode; calculating amount of gas consumed in the fuel sharing mode; and providing feedback on the state of the engine in the fuel sharing mode.

The engine operating method may be determined by a power management system and a gas management system of an integrated automation system operated in conjunction with each other and the power management system may be operated in any one of a diesel mode in which a plurality of engines of the ship are all in the fuel oil mode, a first mixed mode in which some of the plurality of engines are in the fuel oil mode and some of other engines are in the gas mode, a gas only mode in which the plurality of engines are all in the gas mode, a fuel sharing only mode in which the plurality of engines are all in the fuel sharing mode, a second mixed mode in which some of the plurality of engines are in the fuel sharing mode and some of other engines are in the gas mode, and a third mixed mode in which some of the plurality of engines are in the fuel sharing mode and some of the other engines are in the fuel oil mode.

The gas management system may measure an internal pressure of a liquefied natural gas storage tank provided to the ship and calculate a total load assignable to engines in the gas mode or proportion of a gas-based load among the total load assignable to engines in the fuel sharing mode based on the measured internal pressure of the storage tank.

The gas management system may forcibly switch an engine operating in the gas mode to the fuel oil mode or the fuel sharing mode if the internal pressure of the storage tank decreases, and may send surplus boil-off gas to a gas combustion unit for combustion or vent surplus boil-off gas if the internal pressure of the storage tank increases.

The integrated automation system may automatically assign a load to each engine based on information on the total loads assignable to engines in the gas mode and engines in the fuel sharing mode calculated by the gas management system based on the internal pressure of the storage tank.

The power management system may be operated in the fuel sharing only mode, wherein the gas management system (a) determines an amount of boil-off gas expected to be used as a fuel based on the measured pressure of boil-off gas in the storage tank and calculates the maximum load obtainable when operating the engines in the fuel sharing mode using a determined amount of boil-off gas (hereinafter, "maximum boil-off gas-based engine load"); (b) calculates a "boil-off gas-based load assigned to each engine" by dividing the "maximum boil-off-based engine load", calculated in (a), by the "total number of engines"; (c) determines a ratio of natural gas to fuel oil for each engine based on the "boil-off gas-based load assigned to each engine" calculated in (b); (d) operates each engine such that fuel oil and boil-off gas in the storage tank are used as a fuel according to the ratio determined in (c); and (e) repeats the procedure from (a) to (d) based on a changed pressure if the pressure of boil-off gas in the storage tank is changed during operation of each engine.

The power management system may be operated in the second mixed mode, wherein the gas management system (a) determines an amount of boil-off gas expected to be used as a fuel based on the measured pressure of boil-off gas in the storage tank and calculates the maximum load obtainable when operating the engines in the fuel sharing mode and the engines in the gas mode using a determined amount of boil-off gas (hereinafter, "maximum boil-off gas-based engine load"); (b) distributes the "maximum boil-off gas-based engine load" calculated in (a) to the engines in the gas mode; (c) calculates a "boil-off gas-based load assigned to each of the engines in the fuel sharing mode" by dividing the "maximum boil-off gas-based engine load" excluding the load distributed to the engines in the gas mode in (b) by the "number of engines in the fuel sharing mode"; (d) determines a ratio of natural gas to fuel oil for each of the engines in the fuel sharing mode based on the "boil-off gas-based load assigned to each of the engines in the fuel sharing mode" calculated in (c); (e) operates each engine such that fuel oil and boil-off gas in the storage tank are used as a fuel according to the load met by the engines in the gas mode, determined in (b), and the ratio of natural gas to fuel oil for each of the engines in the fuel sharing mode, determined in (d); (f) repeats the procedure from (a) to (e) based on a changed pressure if the pressure of boil-off gas in the storage tank is changed during operation of each engine; (g) increases proportion of fuel oil for the engines in the fuel sharing mode if the amount of boil-off gas in the storage tank is reduced, and switches some or all of the engines in the gas mode to the fuel sharing mode if fuel oil is required above a certain level.

The power management system may be operated in the third mixed mode, wherein the gas management system (a) determines an amount of boil-off gas expected to be used as a fuel based on the measured pressure of boil-off gas in the storage tank and calculates the maximum load obtainable when operating the engines in the fuel sharing mode using a determined amount of boil-off gas (hereinafter, "maximum boil-off gas-based engine load"); (b) calculates a "boil-off gas-based load assigned to each of the engines in the fuel sharing mode" by dividing the "maximum boil-off gas-based engine load", calculated in (a), by the "total number of engines in the fuel sharing mode"; (c) determines a ratio of natural gas to fuel oil for each of the engines in the fuel sharing mode based on the "boil-off gas-based load assigned to each of the engines in the fuel sharing mode" calculated in (b); (d) assigns engine output required for the ship, excluding the load assigned to the engines in the fuel sharing mode, to engines in the fuel oil mode; (e) operates each engine such that fuel oil and boil-off gas in the storage tank are used as a fuel according to the ratio of natural gas to fuel oil for each of the engines in the fuel sharing mode, determined in (c) and the load assigned to the engines in the fuel oil mode, determined in (d); and (f) repeats the procedure from (a) to (e) based on a changed pressure if the pressure of boil-off gas in the storage tank is changed during operation of each engine.

Each of the engines may be operated manually by a user operating the ship, wherein if boil-off gas in the storage tank is sufficient to drive the engine, the user personally determines a point at which optimum efficiency can be achieved within a range of amount of boil-off gas allowable by the power management system (PMS) and the gas management system (GMS), and if boil-off gas in the storage tank is not sufficient to drive the engine, the user personally determines a point at which optimum efficiency can be achieved to the extent that an operation method of forcibly vaporizing liquefied natural gas in the storage tank is maintained.

Each of the engines may be operated in the fuel sharing mode, wherein a load of the engine may be determined to be 15% or more and 85% or less of a total load of the engine.

Each of the engines may be operated in the fuel sharing mode, wherein proportion of a gas-based load among a load of the engine may be determined to be 15% or more and 85% or less of the load of the engine.

Each of the engines may be operated in the fuel sharing mode, wherein as a load of the engine increases, the maximum proportion of a gas-based load among the load of the engine may increase and the minimum proportion of a gas-based load among the load of the engine may decrease.

The power management system may be operated in the second mixed mode, wherein the number of engines in the gas mode may be maximized and the number of engines in the fuel sharing mode may be minimized.

The ship may include a plurality of engines, wherein a load of each individual engine may be maximized to minimize the number of engines to be driven.

The engine operating method may include: (a) calculating a "total gas-based engine load" based on a pressure of boil-off gas in the storage tank; (b) calculating a "total fuel oil-based engine load" by subtracting the "total gas-based engine load" calculated in (a) from engine output required for the ship; (c) determining the number of engines of the ship to be driven by taking into account the engine output required for the ship and the maximum output of each engine (hereinafter, "the number of running engines"); (d) determining a "gas-based engine load" assigned to each engine by dividing the "total gas-based engine load" calculated in (a) by the "number of running engines" calculated in (c); and (e) determining the number of engines that will share the "total fuel oil-based engine load" calculated in (b) by taking into account the maximum load of each engine.

The respective "gas-based engine loads" of engines in the gas mode and engines in the fuel sharing mode may be the same.

The respective loads of engines in the gas mode may be the same and the respective loads of engines in the fuel sharing mode may be the same.

Each of the engines may be a four-stroke DF engine for power generation.

In accordance with another aspect of the present disclosure, there is provided a ship including a plurality of DF engines operable in a fuel sharing mode, wherein the plurality of DF engines are operated in a gas mode or the fuel sharing mode and the number of DF engines operated in the gas mode is maximized and a load of each of the plurality of DF engines is maximized.

### [Advantageous Effects]

According to the engine operating method for a ship according to the present invention, among a plurality of engines operable in a gas mode or a fuel sharing mode, the number of engines operating in the gas mode is maximized, whereby it is possible to use gas that will be discarded when operating an engine in the fuel sharing mode, to minimize instability in the fuel sharing mode, and to minimize emission of nitrogen oxides and sulfur oxides generated during engine combustion.

Since an engine operated in the fuel sharing mode is fueled by both gas and fuel oil, the gas is burnt at a low load, causing high gas consumption. In contrast, an engine operated in the gas mode allows gas to be burnt at a high load. According to the engine operating method for a ship according to the present invention, among a plurality of engines operable in the gas mode or the fuel sharing mode, the number of engines operating in the gas mode is maximized, thereby reducing gas consumption.

In addition, according to the engine operating method for a ship according to the present invention, a load of each individual engine provided to the ship is maximized, thereby extending the service life of the engines.

### [Description of Drawings]

Fig. 1 is a graph showing the proportion of a gas-based load among a load of an engine in a fuel sharing mode (FSM) as a function of the engine load.
Fig. 2 is a graph showing a typical engine operating method for a ship when the total engine output required for the ship is 24,000 kW.
Fig. 3 is a graph showing an engine operating method for a ship according to one embodiment of the present invention when the total engine output required for the ship is 24,000 kW.
Fig. 4 is a graph showing a typical engine operating method for a ship when the total engine output required for the ship is 20,000 kW.
Fig. 5 is a graph showing an engine operating method for a ship according to one embodiment of the present invention when the total engine output required for the ship is 20,000 kW.

### [Best Mode]

Hereinafter, embodiments of the present invention will be described with reference to the accompanying drawings. A ship to which an engine operating method according to the present invention is applied may be a ship for various purposes, such as a liquefied natural gas carrier, a liquefied natural gas-fueled ship, a drillship, and an offshore structure. Although an engine to which the engine operating method for a ship according to the present invention is applied is preferably a DF engine, it should be understood that the present invention is not limited thereto and the engine operating method may be applied to any engine fueled by both fuel oil and natural gas. Herein, the case where the engine operating method for a ship according to the present invention is applied to a DF engine will be described by way of example. It should be understood that the present invention may be embodied in different ways and is not limited to the following embodiments.

Among engines used in a ship, an example of an engine that can be fueled by natural gas is a dual fuel (DF) engine. The DF engine is an engine that can be fueled by both natural gas and fuel oil and may be divided into a four-stroke power generation engine and a two-stroke main propulsion engine.

A four-stroke DF engine for power generation is commonly referred to as a DF engine and is connected to a generator, and the load of the engine depends on the connected generator. When devices connected to the generator require more power, torque rotating the generator is increased. As the torque is increased, the revolution per minute (RPM) of the generator is reduced and more fuel is injected into the engine by a governor of the engine to compensate for reduction in the RPM such that the RPM of the engine is increased, thereby maintaining the rotational speed of the engine at a constant level. Since the load of the engine depends on the rotational speed and torque of the engine, the load of the engine may be regulated by maintaining the rotational speed of the engine at a constant level and adjusting the torque.

**Table 1**

| Load | Gas | Fuel oil |
|---|---|---|
| % | (kJ/kWh) | (g/kWh) |
| 100 | 7300 | 189.0 |
| 95 | 7320 | 189.2 |
| 90 | 7345 | 189.5 |
| 85 | 7400 | 190.0 |
| 80 | 7500 | 191.0 |
| 75 | 7620 | 192.0 |
| 70 | 7700 | 193.4 |
| 65 | 7820 | 195.0 |
| 60 | 7950 | 197.5 |
| 55 | 8100 | 200.5 |
| 50 | 8260 | 204.0 |
| 45 | 8500 | 209.0 |
| 40 | 8800 | 215.0 |
| 35 | 9175 | 223.0 |
| 30 | 9560 | 231.0 |

Table 1 shows fuel consumption according to engine load when the four-stroke DF engine for power generation rotates at a constant speed. Referring to Table 1, it can be seen that as the engine load increases, fuel consumption linearly decreases. That is, as the engine is operated at a higher load, efficiency of the engine becomes better.

Examples of the two-stroke DF engine for main propulsion include an X-DF engine, an ME-GI engine, and the like, and the two-stroke DF engine for main propulsion is connected to a propeller, not a generator, since the engine is an engine for propelling a ship. Unlike the four-stroke DF engine, the fuel consumption of the two-stroke DF engine is high at a low load, is low at a medium load, and becomes high again at a high load, rather being linearly reduced as the engine load increases.

Although a typical DF engine can be fueled by both natural gas and fuel oil, the engine cannot use natural gas and fuel oil as a fuel at the same time. That is, a typical DF engine is driven either in a fuel oil (FO) mode or in a gas mode.

An engine operating method for a ship is mainly determined by how a power management system (PMS) and gas management system (GMS) of an integrated automation system (IAS) are linked together and operated. Methods of operating the power management system (PMS) and the gas management system (GMS) of a ship provided with a typical DF engine are as follows:

Since a typical DF engine can use either natural gas or fuel oil as a fuel, the power management system (PMS) of a ship provided with the typical DF engine is driven in any one of a diesel mode in which a plurality of engines of the ship are all in the fuel oil mode (FO mode), a mixed mode in which some of the plurality of engines are in the fuel oil mode (FO mode) and some of other engines are in the gas mode, and a gas only mode in which the plurality of engines are all in the gas mode.

The gas management system (GMS) of the ship provided with the typical DF engine measures an internal pressure of a storage tank and then calculates the total load assignable to the engines operated in the gas mode based on the measured internal pressure of the storage tank. The gas management system (GMS) of the ship provided with the typical DF engine forcibly switches an engine running in the gas mode to the fuel oil mode if the internal pressure of the storage tank decreases, and sends surplus boil-off gas to a gas combustion unit (GCU) for combustion or vents surplus boil-off gas to the outside if the internal pressure of the storage tank increases, while providing a user with information on the total load assignable to the engines operated in the gas mode, calculated based on the measured internal pressure of the storage tank. As such, the gas management system (GMS) of the ship provided with the typical DF engine may serve to maintain the internal pressure of the storage tank at a constant level.

The integrated automation system (IAS) of the ship provided with the DF engine may have a special function to automatically assign a load to each engine in the gas mode based on the information on the total load assignable to engines in the gas mode, calculated based on the internal pressure of the storage tank measured by the gas management system (GMS).

In the case where the integrated automation system (IAS) of the ship provided with the DF engine has a special function to automatically assign a load to each engine in the gas mode, when the pressure of boil-off gas in the storage tank is high, the engine load is increased and the speed of the ship increases, and when the pressure of boil-off gas in the storage tank is low, the engine load is decreased and the speed of the ship decreases.

One embodiment of a method in which an appropriate load of each engine is determined based on the pressure of boil-off gas in the storage tank by the gas management system (GMS) of the ship provided with the typical DF engine in a tank pressure control mode is as follows:
(a) The amount of boil-off gas expected to be used as a fuel is determined based on the measured pressure of boil-off gas in the storage tank, and the maximum load that can be obtained when operating engines in the gas mode using a determined amount of boil-off gas (hereinafter, "maximum boil-off gas-based engine load") is calculated.
(b) The "maximum boil-off gas-based engine load" calculated in (a) is divided by the "number of engines in the gas mode" to calculate a "load assigned to each of the engines in the gas mode".
(c) If engine output required for the ship is smaller than the "maximum boil-off gas-based engine load" calculated in (a), surplus boil-off gas is vented or burned in the gas combustion unit (GCU).
(d) If engine output required for the ship is greater than the "maximum boil-off gas-based engine load" calculated in (a), the engines in the gas-mode are operated such that the "load assigned to each of the engines in the gas-mode" calculated in (b) can be actually assigned to each of the engines in the gas mode, and the rest of the required engine output is allowed to be generated by engines in the fuel oil mode.
(e) If the engine output required for the ship cannot be met even when boil-off gas in the storage tank is entirely used and all of the engines in the fuel oil mode are used, liquefied natural gas in the storage tank is regasified and compressed to be used as a fuel.

A fuel gas supply system (FGGS) is used to regasify liquefied natural gas in the storage tank. The fuel gas supply system (FGGS) sends boil-off gas to engines if boil-off gas in the storage tank is sufficient to run the engines; sends surplus boil-off gas to the gas combustion unit (GCU) if boil-off gas in the storage tank is over-sufficient to run all the engines; and regasifies liquefied natural gas in the storage tank and sends the regasified liquefied natural gas to engines if boil-off gas in the storage tank is not sufficient to run the engines. The gas management system (GMS) controls the fuel gas supply system (FGGS) to maintain the internal pressure of the storage tank.

A fuel sharing mode (FSM) refers to a state in which a DF engine is fueled by natural gas and fuel oil at the same time. According to the present invention, a typical DF engine, which can only be operated either in the gas mode or in the fuel oil mode (FO mode), is improved not to have reduced combustion performance even when fuel oil and gas are injected into the engine at the same time so as to be operable in the fuel sharing mode as well as in the gas mode and the fuel oil mode (FO mode).

The DF engine, which is operated in any one of the gas mode, the fuel oil mode (FO mode), and the fuel sharing mode (FSM), may be operated in the fuel sharing mode (FSM) through a process including switching the engine to the fuel sharing mode (FSM), determining the proportion of gas burned in the fuel sharing mode (FSM), calculating the amount of gas consumed in the fuel sharing mode (FSM), and providing feedback on the state of the engine in the fuel sharing mode (FSM).

The DF engine operable in the fuel sharing mode (FSM) has the advantage that use of boil-off gas generated in the storage tank can be maximized, as compared with a typical DF engine.

Next, a case where a ship is provided with four DF engines each having a capacity of 10,000 kW, the total engine load required for the ship is 32,000 kW, boil-off gas generated in a storage tank is sufficient to produce a load of 30,000 kW, and the maximum load of each of the engines is 90% will be described by way of example.

When the DF engines are typical DF engines, in view of the fact that gas is less expensive than fuel oil, it is desirable that three engines be operated in the gas mode to each meet a load of 9,000 kW and one engine be operated in the fuel oil mode to meet the remaining 5,000 kW. However, in this case, there is a problem in that only the boil-off gas corresponding to 27,000 kW is used, and the boil-off gas corresponding to the remaining 3,000 kW is discarded.

When the DF engines are DF engines operable in the fuel sharing mode (FSM), in view of the fact that gas is less expensive than fuel oil, three engines are operated in the gas mode to each meet a load of 9,000 kW and one engine is operated in the fuel sharing mode to generate 3,000 kW using natural gas and generate 2,000 kW using fuel oil to meet the remaining 5,000 kW, thereby minimizing discarded boil-off gas.

In addition, the DF engine operable in the fuel sharing mode (FSM) has higher fuel oil combustion efficiency than a typical DF engine. That is, the DF engine operable in the fuel sharing mode (FSM) consumes less fuel oil to produce the same amount of load than a typical DF engine. Next, the case where a load of 300 kW is produced using fuel oil will be described by way of example.

Referring to Table 1, in a typical DF engine, when a DF engine having a capacity of 1,000 kW is operated in the fuel oil mode at a load of 30%, fuel oil is consumed in an amount of 231.0 g/kWh×300 kW = 69,300.0 g/h.

Referring to Table 1, in the case of the DF engine operable in the fuel sharing mode (FSM), when a DF engine having a capacity of 1,000 kW is operated in the fuel sharing mode (FSM) at a load of 50% after the ratio of gas to fuel oil is set such that a load of 200 kW is produced using gas and a load of 300 kW is produced using fuel oil, the fuel oil is consumed in an amount of 204.0 g/kWh×300 kW = 61,200.0 g/h.

It can be seen that the DF engine operable in the fuel sharing mode (FSM) has higher fuel oil combustion efficiency than a typical DF engine since the typical DF engine consumes 69,300.0 g/h of fuel oil and the DF engine operable in the fuel sharing mode (FSM) consumes 61,200.0 g/h of fuel oil to produce a load of 300 kW.

Next, methods of operating the power management system (PMS) and gas management system (GMS) of a ship provided with the DF engine which is operated in any one of the gas mode, the fuel oil (FO mode), and the fuel sharing mode (FSM) will be described.

Like the power management system (PMS) of a ship provided with a typical DF engine, the power management system (PMS) of a ship provided with the DF engine operable in the fuel sharing mode (FSM) may be driven in any one of the diesel mode, the mixed mode, and the gas only mode. Further, the power management system (PMS) of a ship provided with the DF engine operable in the fuel sharing mode (FSM) may also be operated in any one of a fuel sharing only mode in which a plurality of engines of the ship are all in the fuel sharing mode (FSM), a mixed mode in which some of the plurality of engines are in the fuel sharing mode (FSM) and some of other engines are in the fuel oil mode (FO mode), and a mixed mode in which some of the plurality of engines are in the fuel sharing mode (FSM) and some of other engines are in the gas mode.

The gas management system (GMS) of a ship provided with the DF engine operable in the fuel sharing mode (FSM) measures an internal pressure of a storage tank and then calculates the total load assignable to the engines operated in the gas mode and the proportion of a gas-based load among the total load assignable to the engines operated in the fuel sharing mode (FSM), based on the measured internal pressure of the storage tank.

In addition, the gas management system (GMS) of a ship provided with the DF engine operable in the fuel sharing mode (FSM) forcibly switches engines running in the gas mode to the fuel oil mode or the fuel sharing mode if the internal pressure of the storage tank decreases, and sends surplus boil-off gas to the gas combustion unit (GCU) for combustion or vents surplus boil-off gas to the outside if the internal pressure of the storage tank increases, while providing a user with information on the total load assignable to the engines operated in the gas mode and the proportion of a gas-based load among the total load assignable to the engines operated in the fuel sharing mode (FSM).

Like the gas management system (GMS) of a ship provided with a typical DF engine, the gas management system (GMS) of a ship provided with the DF engine operable in the fuel sharing mode (FSM) may serve to maintain the internal pressure of the storage tank at a constant level.

In the case where the integrated automation system (IAS) of a ship provided with the DF engine operable in the fuel sharing mode (FSM) has a special function to automatically assign a load to each engine based on the information on the total loads assignable to engines in the gas mode and engines in the fuel sharing mode, calculated by the gas management system (GMS) based on the internal pressure of the storage tank, when the pressure of boil-off gas in the storage tank is high, the load of the engines is increased and the speed of the ship increases, and when the pressure of boil-off gas in the storage tank is low, the load of the engines is decreased and the speed of the ship decreases, as in the case of the ship provided with a typical DF engine.

However, the gas management system (GMS) of a ship provided with the DF engine operable in the fuel sharing mode (FSM) may also be operated in the following manner since the gas management system is operated in conjunction with the power management system (PMS) which may be driven in any one of the fuel sharing only mode, the mixed mode of the fuel sharing mode (FSM) and the fuel oil mode (FO Mode), and the mixed mode of the fuel sharing mode (FSM) and the gas mode.

When the power management system (PMS) is in the fuel sharing only mode,
(a) the amount of boil-off gas expected to be used as a fuel is determined based on the measured pressure of boil-off gas in the storage tank, and the maximum load that can be obtained when operating the engines in the fuel sharing mode using a determined amount of boil-off gas (hereinafter, "maximum boil-off gas-based engine load") is calculated.
(b) The "maximum boil-off gas-based engine load" calculated in (a) is divided by the "total number of engines" to calculate a "boil-off gas-based load assigned to each of the engines".
(c) A ratio of natural gas to fuel oil for each engine is determined based on the "boil-off gas-based load assigned to each of the engines" calculated in (b). (For example, natural gas : fuel oil=7:3)
(d) Each engine is operated such that fuel oil and boil-off gas in the storage tank are used as a fuel according to the ratio determined in (c).
(e) If the pressure of boil-off gas in the storage tank is changed during operation of each engine, the procedure from (a) to (d) is repeated based on the changed pressure.

When the power management system (PMS) is in the mixed mode of the fuel sharing mode (FSM) and the fuel oil mode (FO mode),
(a) the amount of boil-off gas expected to be used as a fuel is determined based on the measured pressure of boil-off gas in the storage tank, and the maximum load that can be obtained when operating the engines in the fuel sharing mode using a determined amount of boil-off gas (hereinafter, "maximum boil-off gas-based engine load") is calculated;
(b) the "maximum boil-off gas-based engine load" calculated in (a) is divided by the "total number of engines in the fuel sharing mode" to calculate a "boil-off gas-based load assigned to each of the engines in the fuel sharing mode";
(c) A ratio of natural gas to fuel oil for each of the engines in the fuel sharing mode is determined based on the "boil-off gas-based load assigned to each of the engines in the fuel sharing mode" calculated in (b) (for example, natural gas : fuel oil=7:3);
(d) engine output required for the ship, excluding the load assigned to the engines in the fuel sharing mode, is allowed to be generated by engines in the fuel oil mode;
(e) each engine is operated such that fuel oil and boil-off gas in the storage tank are used as a fuel according to the ratio of natural gas to fuel oil for each of the engines in the fuel sharing mode determined in (c) and the load met by the engines in the fuel oil mode determined in (d); and
(f) if the pressure of boil-off gas in the storage tank is changed during operation of each engine, the procedure from (a) to (e) is repeated based on the changed pressure.

When the power management system (PMS) is in the mixed mode of the fuel sharing mode (FSM) and the gas mode,
(a) the amount of boil-off gas expected to be used as a fuel is determined based on the measured pressure of boil-off gas in the storage tank, and the maximum load that can be obtained when operating the engines in the fuel sharing mode and the engines in the gas mode using a determined amount of boil-off gas (hereinafter, "maximum boil-off gas-based engine load") is calculated;
(b) the "maximum boil-off gas-based engine load" calculated in (a) is first distributed to the engines in the gas mode. Since gas is less expensive than fuel oil, it is preferable to preferentially distribute the load to the engines in the gas mode;
(c) the "maximum boil-off gas-based engine load", excluding the load distributed to the engines in the gas mode in (b), is divided by the "number of engines in the fuel sharing mode" to calculate a "boil-off gas-based load assigned to each of the engines in the fuel sharing mode";
(d) a ratio of natural gas to fuel oil for each of the engines in the fuel sharing mode is determined based on the "boil-off gas-based load assigned to each of the engines in the fuel sharing mode" calculated in (c) (for example, natural gas : fuel oil=7:3);
(e) each engine is operated such that fuel oil and boil-off gas in the storage tank are used as a fuel according to the load met by the engines in the gas mode, determined in (b), and the ratio of natural gas to fuel oil for each of the engines in the fuel sharing mode, determined in (d);
(f) if the pressure of boil-off gas in the storage tank is changed during operation of each engine, the procedure from (a) to (e) is repeated based on the changed pressure; and
(g) if the amount of boil-off gas in the storage tank is reduced, the proportion of fuel oil for the engines in the fuel sharing mode is increased to meet the engine output required for the ship. If fuel oil is required above a certain level, some or all of the engines in the gas mode are switched to the fuel sharing mode.

The DF engine operable in the fuel sharing mode (FSM) may also be operated manually by a user operating a ship. In the case that the DF engine operable in the fuel sharing mode (FSM) is operated manually, if boil-off gas in the storage tank is sufficient to drive the engine, a user personally determines a point at which optimum efficiency can be achieved within the range of amount of boil-off gas allowable by the power management system (PMS) and the gas management system (GMS). In addition, if boil-off gas in the storage tank is not sufficient to drive the engine, a user personally determines a point at which optimum efficiency can be achieved to the extent that an operation method of forcibly vaporizing liquefied natural gas in the storage tank is maintained.

In the case that the DF engine operable in the fuel sharing mode (FSM) is manually operated by a user, the above embodiment can help to suggest a point where optimum efficiency can be achieved.

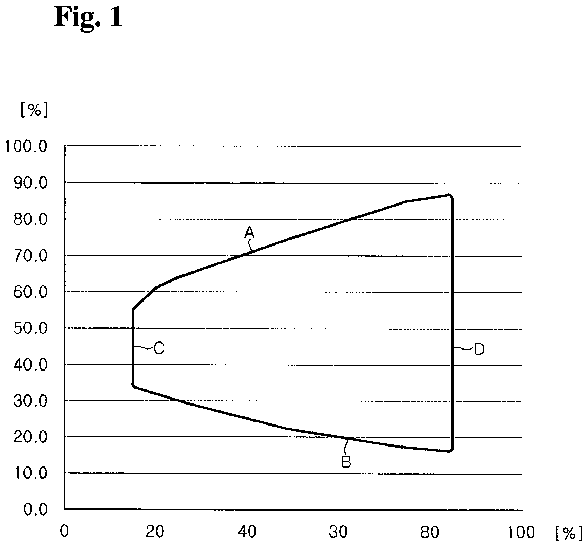

Fig. 1 is a graph showing the proportion of a gas-based load among a load of an engine in the fuel sharing mode (FSM) as a function of the load of the engine. In Fig. 1, the horizontal axis represents the "load of the engine" in % and the vertical axis represents the "proportion of a gas-based load" among the load of the engine in the fuel sharing mode (FSM) in %. In addition, A of Fig. 1 is a graph showing the "maximum value of the proportion of a gas-based load" as a function of the load of the engine; B of Fig. 1 is a graph showing the "minimum value of the proportion of a gas-based load" as a function of the load of the engine; C of Fig. 1 is a graph showing the minimum load of the engine; and D of Fig. 1 is a graph showing the maximum load of the engine.

Referring to Fig. 1, it can be seen that if the engine load is too high (approximately 85% or more) or too low (approximately 15% or less), the engine cannot be operated in the fuel sharing mode (FSM). Since, if the engine load is too high or too low, it is difficult to balance combustion explosion pressures of cylinders when injecting gas into the engine, the range of engine load within which that the engine can be operated in the fuel sharing mode (FSM) is limited.

In addition, it can be seen that the "proportion of a gas-based load" among the load of the engine is limited to about 15% or more and 85% or less. That is, the "proportion of a gas-based load" is limited in accordance with the engine load. For example, the engine in the fuel sharing mode (FSM) cannot be operated when the proportion of a gas-based load is 5%.

As shown in Fig. 1, as the engine load increases, the "maximum value of the proportion of a gas-based load" gradually increases and the "minimum value of the proportion of a gas-based load" gradually decreases. This indicates that, as the engine load increases, the acceptable range of the proportion of a gas-based load is widened.

The fuel sharing mode (FSM) has an advantage of minimizing discarded boil-off gas. However, since two different fuels, that is, gas and fuel oil, are burned together in the fuel sharing mode, careful adjustment of an air fuel ratio is necessary. If the air-fuel ratio is not properly controlled, the gas is not completely combusted and the unburned gas can be contained in exhaust gas and then discharged. In addition, when the gas is not combusted more often, stress received by internal components of the engine becomes larger. That is, when using the fuel sharing mode (FSM), the risk of damaging the engine is greater than when the engine is driven by the fuel oil alone.

When the engine is driven by the gas alone, emission of nitrogen oxides is low and the emission regulations of the IMO can be satisfied, whereas, when the fuel oil is injected into the engine in the fuel sharing mode (FSM), emission of nitrogen oxides sharply increases and it becomes difficult to satisfy the emission regulations of the IMO. Further, when the engine is driven the fuel sharing mode (FSM) using the fuel oil, which is a liquid fuel, a larger amount of sulfur oxides is emitted than when the engine is driven by gas alone.

Therefore, when the power management system (PMS) is in the mixed mode of the fuel sharing mode (FSM) and the gas mode, it is possible to prevent damage to the engine and to reduce the emission of nitrogen oxides and sulfur oxides by maximizing the number of engines in the gas mode and minimizing the number of engines in the fuel sharing mode (FSM).

In addition, when a load of each of the plurality of engines of a ship is maximized to minimize the number of engines to be driven, the number of idle engines is increased, thereby extending service life of the engines.

One embodiment of a method of maximizing the number of engines in the gas mode to minimize the number of engines in the fuel sharing mode (FSM) and maximizing a load of each individual engine when the power management system (PMS) is in the mixed mode of the fuel sharing mode (FSM) and the gas mode is as follows.
(a) The "total gas-based engine load" is calculated based on the pressure of boil-off gas in the storage tank. The "total gas-based engine load" includes the gas-based load of engines in the fuel sharing mode as well as the total load of engines in the gas mode.
(b) The "total fuel oil-based engine load" is calculated by subtracting the "total gas-based engine load" calculated in (a) from engine output required for the ship. If the engine output power required for the ship is smaller than the "total fuel oil-based engine load" calculated in (a), it is desirable that the power management system (PMS) be operated in the gas only mode rather than being operated in the mixed mode of the fuel sharing mode (FSM) and the gas mode and surplus boil-off gas be sent to the gas combustion unit (GCU) for combustion or vented to the outside.
(c) It is determined how many of the plurality of engines of the ship will be driven by taking into account the engine output required for the ship and the maximum output of each engine. Here, each engine is operated at the maximum load to minimize the number of engines to be operated (hereinafter, "the number of running engines").
(d) A "gas-based engine load" assigned to each engine is determined by dividing the "total gas-based engine load" calculated in (a) by the "number of running engines" calculated in (c). Although it is desirable that the respective "gas-based engine loads" assigned to engines in the gas mode and engines in the fuel sharing mode be the same, the "gas-based engine loads" of all the engines are not necessarily the same. However, preferably, the respective loads of engines in the gas mode are the same and the respective loads of engines in the fuel sharing mode are the same. (For example, fuel sharing mode:gas mode:gas mode = 5000:5500:5500)
(e) The number of engines that will share the "total fuel oil-based engine load" calculated in (b) is determined by taking into account the maximum load of each engine. Since the power management system (PMS) according to the present invention is in the mixed mode of the fuel sharing mode (FSM) and the gas mode, only the engines in the fuel sharing mode (FSM) are fueled by fuel oil. Thus, engines sharing the "total fuel oil-based engine load" are engines in the fuel sharing mode.

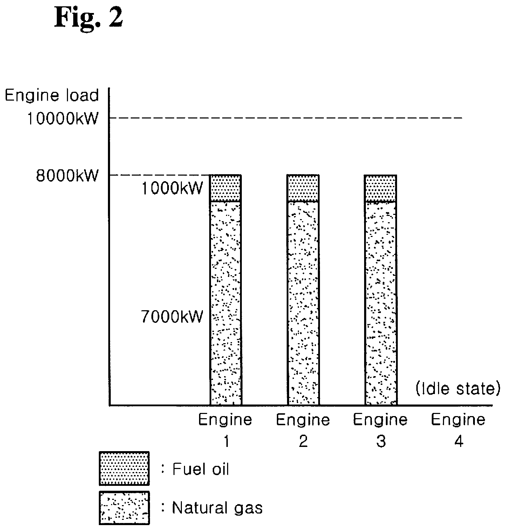

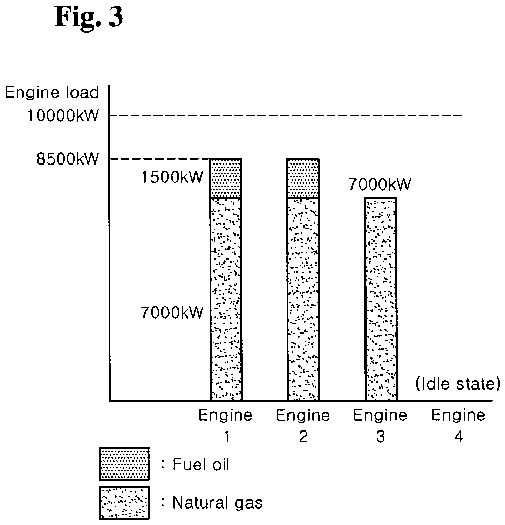

Fig. 2 is a graph showing a typical engine operating method for a ship when the total engine output required for the ship is 24,000 kW, and Fig. 3 is a graph showing an engine operating method for a ship according to one embodiment of the present invention when the total engine output power required for the ship is 24,000 kW. The engine operating method for a ship according to this embodiment will be described in comparison with the typical method with reference to Figs. 2 and 3.

When four engines are provided to the ship, according to the typical engine operating method for a ship, three of the four engines are driven in the fuel sharing mode and the other engine is in an idle state. Accordingly, for each of the engines, the proportional expression of fuel oil-based engine load:natural gas-based engine load = 1,000 kW:7,000 kW is satisfied.

Conversely, in the engine operating method for a ship according to this embodiment, when four engines are provided to the ship, one of the three running engines is driven in the gas mode to meet a load of 7,000 kW and the other two engines are driven in the fuel sharing mode. Accordingly, for each of the engines in the fuel sharing mode, the proportional expression of fuel oil-based engine load:natural gas-based engine load = 1,500 kW:7,000 kW is satisfied.

In other words, in the engine operating method for a ship according to this embodiment, the number of engines in the fuel sharing mode is reduced from three to two, as compared with the typical engine operating method.

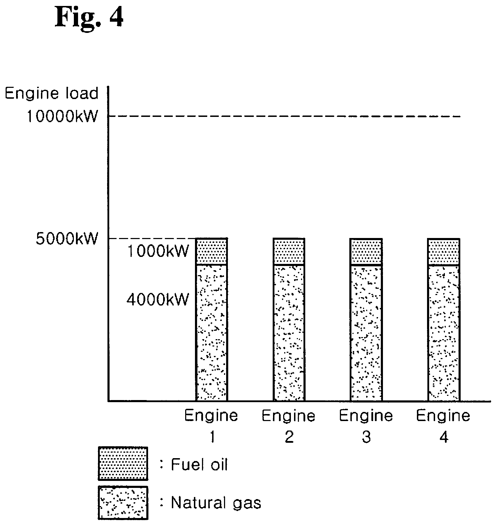

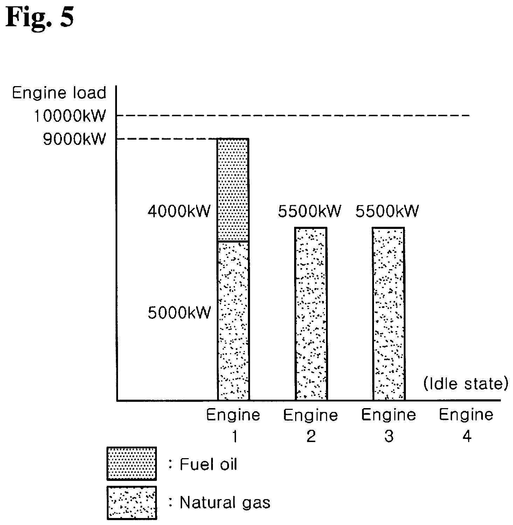

Fig. 4 is a graph showing a typical engine operating method for a ship when the total engine output required for the ship is 20,000 kW, and Fig. 5 is a graph showing an engine operating method for a ship according to one embodiment of the present invention when the total engine output required for the ship is 20,000 kW. The engine operating method for a ship according to this embodiment will be described in comparison with the typical method with reference to Figs. 4 and 5.

When four engines are provided to the ship, according to the typical engine operating method for a ship, all four engines are driven in the fuel sharing mode. Accordingly, for each engine, the proportional expression of fuel oil-based engine load:natural gas-based engine load = 1,000 kW:4,000 kW is satisfied.

In contrast, in the engine operating method for a ship according to this embodiment, when four engines are provided to the ship, only three engines are driven and two of the three running engines are driven in the gas mode to each output 5,500 kW while the other engine is driven in the fuel sharing mode. Accordingly, for the engine in the fuel sharing mode, the proportional expression of fuel oil-based engine load:natural gas-based engine load = 4,000 kW:5,000 kW is satisfied.

Next, when the total engine output required for the ship is 20,000 kW, an engine operating method for a ship according to one embodiment of the present invention will be described with reference to the "embodiment of the method for maximizing the load of each individual engine" and Fig. 5.

When 20,000 kW of the total engine output required for the ship is divided by 9,000 kW, which is determined as the maximum output of each engine, as in (c) of the embodiment of the method for maximizing the load of each individual engine, it can be seen that three engines can meet the total engine output required for the ship (∵ 9000 kW×3 > 20,000 kW). Accordingly, unlike the typical engine operating method in which the four engines are all used, the engine operating method for a ship according to this embodiment allows only three engines to be used. In accordance with the engine operating method for a ship according to this embodiment, the load of each individual engine is maximized to minimize the number of engines to be operated, thereby extending the service life of the engines.

In addition, when the "total gas-based engine load", 16,000 kW is divided by the "number of running engines", 3, as in (d) of the embodiment of the method for maximizing the load of each individual engine, it can be seen that it is appropriate for each engine to meet a load of about 5,000 kW to about 5,500 kW. Thus, the load of each of the engines in the gas mode is determined to be 5,500 kW such that the respective loads of the engines in the gas mode can be the same.

Since the maximum load of each engine is 9,000 kW, when the remaining "gas-based engine load" is assigned to the remaining one engine in the fuel sharing mode, the proportional expression of fuel oil-based engine load:natural gas-based engine load = 4,000 kW:5,000 kW is satisfied, causing no problem. In accordance with the engine operating method for a ship according to this embodiment, the number of engines operated in the gas mode is maximized and the number of engines operated in the fuel sharing mode is minimized, such that it is possible to minimize instability in the fuel sharing mode and to minimize emission of nitrogen oxides and sulfur oxides generated during engine combustion.

## Claims

1. An engine operating method for a ship provided with engines operable using natural gas and fuel oil at the same time, wherein each of the engines is operated in any one of a gas mode in which each of the engines is driven using natural gas as a fuel, a fuel oil mode in which each of the engines is driven using fuel oil as a fuel, and a fuel sharing mode in which each of the engines is driven using natural gas and fuel oil at the same time,
wherein the engine operating method is determined by a power management system and a gas management system of an integrated automation system operated in conjunction with each other, the power management system being operated in any one of a diesel mode in which a plurality of engines of the ship are all in the fuel oil mode, a first mixed mode in which some of the plurality of engines are in the fuel oil mode and some of other engines are in the gas mode, a gas only mode in which the plurality of engines are all in the gas mode, a fuel sharing only mode in which the plurality of engines are all in the fuel sharing mode, a second mixed mode in which some of the plurality of engines are in the fuel sharing mode and some of other engines are in the gas mode, and a third mixed mode in which some of the plurality of engines are in the fuel sharing mode and some of other engines are in the fuel oil mode,
wherein the gas management system measures an internal pressure of a liquefied natural gas storage tank provided to the ship and calculates a total load assignable to engines in the gas mode or proportion of a gas-based load among the total load assignable to engines in the fuel sharing mode based on the measured internal pressure of the storage tank, and
wherein the power management system is operated in the second mixed mode, and the number of engines in the gas mode is maximized and the number of engines in the fuel sharing mode is minimized,
**characterized in that** the method comprises:
(a) calculating a "total gas-based engine load" based on a pressure of boil-off gas in the storage tank;
(b) calculating a "total fuel oil-based engine load" by subtracting the "total gas-based engine load" calculated in (a) from engine output required for the ship;
(c) determining the number of engines of the ship to be driven by taking into account the engine output required for the ship and the maximum output of each engine (hereinafter, "the number of running engines");
(d) determining a "gas-based engine load" assigned to each engine by dividing the "total gas-based engine load" calculated in (a) by the "number of running engines" calculated in (c); and
(e) determining the number of engines that will share the "total fuel oil-based engine load" calculated in (b) by taking into account the maximum load of each engine.

2. The engine operating method according to claim 1, wherein each of the engines is operated in the fuel sharing mode through a process comprising: switching the engine to the fuel sharing mode; determining proportion of gas burned in the fuel sharing mode; calculating amount of gas consumed in the fuel sharing mode; and providing feedback on the state of the engine in the fuel sharing mode.

3. The engine operating method according to claim 1, wherein the gas management system forcibly switches the engines operating in the gas mode to the fuel oil mode or the fuel sharing mode if the internal pressure of the storage tank decreases, and sends surplus boil-off gas to a gas combustion unit for combustion or vents surplus boil-off gas if the internal pressure of the storage tank increases.

4. The engine operating method according to claim 1, wherein the integrated automation system automatically assigns a load to each engine based on information on the total loads assignable to engines in the gas mode and engines in the fuel sharing mode calculated by the gas management system based on the internal pressure of a storage tank.

5. The engine operating method according to claim 1, wherein the power management system is operated in the fuel sharing only mode, and the gas management system (a) determines an amount of boil-off gas expected to be used as a fuel based on the measured pressure of boil-off gas in the storage tank and calculates the maximum load obtainable when operating the engines in the fuel sharing mode using a determined amount of boil-off gas (hereinafter, "maximum boil-off gas-based engine load"); (b) calculates a "boil-off gas-based load assigned to each engine" by dividing the "maximum boil-off-based engine load", calculated in (a), by the "total number of engines"; (c) determines a ratio of natural gas to fuel oil for each engine based on the "boil-off gas-based load assigned to each engine" calculated in (b); (d) operates each engine such that fuel oil and boil-off gas in the storage tank are used as a fuel according to the ratio determined in (c); and (e) repeats the procedure from (a) to (d) based on a changed pressure if the pressure of boil-off gas in the storage tank is changed during operation of each engine.

6. The engine operating method according to claim 1, wherein the power management system is operated in the second mixed mode, and the gas management system (a) determines an amount of boil-off gas expected to be used as a fuel based on the measured pressure of boil-off gas in the storage tank and calculates the maximum load obtainable when operating the engines in the fuel sharing mode and the engines in the gas mode using a determined amount of boil-off gas (hereinafter, "maximum boil-off gas-based engine load"); (b) distributes the "maximum boil-off gas-based engine load" calculated in (a) to the engines in the gas mode; (c) calculates a "boil-off gas-based load assigned to each of the engines in the fuel sharing mode" by dividing the "maximum boil-off gas-based engine load" excluding the load distributed to the engines in the gas mode in (b) by the "number of engines in the fuel sharing mode"; (d) determines a ratio of natural gas to fuel oil for each of the engines in the fuel sharing mode based on the "boil-off gas-based load assigned to each of the engines in the fuel sharing mode" calculated in (c); (e) operates each engine such that fuel oil and boil-off gas in the storage tank are used as a fuel according to the load met by the engines in the gas mode, determined in (b), and the ratio of natural gas to fuel oil for each of the engines in the fuel sharing mode, determined in (d); (f) repeats the procedure from (a) to (e) based on a changed pressure if the pressure of boil-off gas in the storage tank is changed during operation of each engine; (g) increases proportion of fuel oil for the engines in the fuel sharing mode if the amount of boil-off gas in the storage tank is reduced, and switches some or all of the engines in the gas mode to the fuel sharing mode if fuel oil is required above a certain level.

7. The engine operating method according to claim 1, wherein the power management system is operated in the third mixed mode and the gas management system (a) determines an amount of boil-off gas expected to be used as a fuel based on the measured pressure of boil-off gas in the storage tank and calculates the maximum load obtainable when operating the engines in the fuel sharing mode using a determined amount of boil-off gas (hereinafter, "maximum boil-off gas-based engine load"); (b) calculates a "boil-off gas-based load assigned to each of the engines in the fuel sharing mode" by dividing the "maximum boil-off gas-based engine load", calculated in (a), by the "total number of engines in the fuel sharing mode"; (c) determines a ratio of natural gas to fuel oil for each of the engines in the fuel sharing mode based on the "boil-off gas-based load assigned to each of the engines in the fuel sharing mode" calculated in (b); (d) assigns engine output required for the ship, excluding the load assigned to the engines in the fuel sharing mode, to engines in the fuel oil mode; (e) operates each engine such that fuel oil and boil-off gas in the storage tank are used as a fuel according to the ratio of natural gas to fuel oil for each of the engines in the fuel sharing mode, determined in (c) and the load assigned to the engines in the fuel oil mode, determined in (d); and (f) repeats the procedure from (a) to (e) based on a changed pressure if the pressure of boil-off gas in the storage tank is changed during operation of each engine.

8. The engine operating method according to claim 1, wherein each of the engines is operated manually by a user operating the ship, and
wherein, if boil-off gas in the storage tank is sufficient to drive the engine, the user personally determines a point at which optimum efficiency can be achieved within a range of amount of boil-off gas allowable by the power management system (PMS) and the gas management system (GMS), and if boil-off gas in the storage tank is not sufficient to drive the engine, the user personally determines a point at which optimum efficiency can be achieved to the extent that an operation method of forcibly vaporizing liquefied natural gas in the storage tank is maintained.

9. The engine operating method according to claim 1, wherein when each of the engines is operated in the fuel sharing mode, a load of the engine is determined to be 15% or more and 85% or less of a total load of the engine.

10. The engine operating method according to claim 1, wherein when each of the engines is operated in the fuel sharing mode, proportion of a gas-based load among a load of the engine is determined to be 15% or more and 85% or less of the load of the engine.

11. The engine operating method according to claim 1, wherein each of the engines is operated in the fuel sharing mode, and, as a load of the engine increases, the maximum proportion of a gas-based load among the load of the engine increases and the minimum proportion of a gas-based load among the load of the engine decreases.

12. The engine operating method according to claim 1, wherein the ship comprises a plurality of engines and a load of each individual engine is maximized to minimize the number of engines to be driven.

13. The engine operating method according to claim 1, wherein the respective "gas-based engine loads" of engines in the gas mode and engines in the fuel sharing mode are the same.

14. The engine operating method according to claim 1, wherein the respective loads of engines in the gas mode are the same and the respective loads of engines in the fuel sharing mode are the same.

15. The engine operating method according to any one of claims 1 to 14, wherein each of the engines is a four-stroke DF engine for power generation.

## Patentansprüche

1. Motorbetriebsverfahren für ein Schiff, dass mit Motoren versehen ist, die unter gleichzeitiger Verwendung von Erdgas und Heizöl betrieben werden können, wobei jeder der Motoren in einem beliebigen von einem Gasmodus, in dem jeder der Motoren unter Verwendung von Erdgas als Kraftstoff angetrieben wird, einem Heizölmodus, in dem jeder der Motoren unter Verwendung von Heizöl als Kraftstoff angetrieben wird, und einem Kraftstoff-Sharing-Modus, in dem jeder der Motoren unter gleichzeitiger Verwendung von Erdgas und Heizöl angetrieben wird, betrieben wird,
wobei das Motorbetriebsverfahren durch ein Energiemanagementsystem und ein Gasmanagementsystem eines integrierten Automatisierungssystems bestimmt wird, die in Verbindung miteinander betrieben werden, wobei das Energiemanagementsystem in einem beliebigen von einem Dieselmodus, in dem sich mehrere Motoren des Schiffes alle in dem Heizölmodus befinden, einem ersten Mischmodus, in dem sich einige der mehreren Motoren in dem Heizölmodus befinden und sich einige der anderen Motoren in dem Gasmodus befinden, einem Nur-GasModus, in dem sich die mehreren Motoren alle in dem Gasmodus befinden, einem Nur-Kraftstoff-Sharing-Modus, in dem sich die mehreren Motoren alle in dem Kraftstoff-Sharing-Modus befinden, einem zweiten Mischmodus, in dem sich einige der mehreren Motoren in dem Kraftstoff-Sharing-Modus befinden und sich einige der anderen Motoren in dem Gasmodus befinden, und einem dritten Mischmodus, in dem sich einige der mehreren Motoren in dem Kraftstoff-Sharing-Modus befinden und sich einige der anderen Motoren in dem Heizölmodus befinden, betrieben wird,
wobei das Gasmanagementsystem einen Innendruck eines Flüssigerdgas-Lagertanks misst, mit dem das Schiff versehen ist, und basierend auf dem gemessenen Innendruck des Lagertanks eine Gesamtlast, die Motoren in dem Gasmodus zuordenbar ist, oder einen Anteil einer Last auf Gasbasis an der Gesamtlast, die Motoren in dem Kraftstoff-Sharing-Modus zuordenbar ist, berechnet, und
wobei das Energiemanagementsystem in dem zweiten Mischmodus betrieben wird und die Anzahl von Motoren in dem Gasmodus maximiert wird und die Anzahl von Motoren in dem Kraftstoff-Sharing-Modus minimiert wird,
**dadurch gekennzeichnet, dass** das Verfahren umfasst:
(a) Berechnen einer "Gesamtmotorlast auf Gasbasis", basierend auf einem Druck von Boil-Off-Gas in dem Lagertank,
(b) Berechnen einer "Gesamtmotorlast auf Heizölbasis" durch Subtrahieren der in (a) berechneten "Gesamtmotorlast auf Gasbasis" von der für das Schiff erforderlichen Motorleistung,
(c) Bestimmen der Anzahl der anzutreibenden Motoren des Schiffes unter Berücksichtigung der für das Schiff erforderlichen Motorleistung und der maximalen Leistung jedes Motors (nachfolgend "die Anzahl laufender Motoren"),
(d) Bestimmen einer jedem Motor zugeordneten "Motorlast auf Gasbasis" durch Dividieren der in (a) berechneten "Gesamtmotorlast auf Gasbasis" durch die in (c) berechnete "Anzahl laufender Motoren", und
(e) Bestimmen der Anzahl von Motoren, die sich die in (b) berechnete "Gesamtmotorlast auf Heizölbasis" teilen, indem die maximale Last jedes Motors berücksichtigt wird.

2. Motorbetriebsverfahren nach Anspruch 1, wobei jeder der Motoren in dem Kraftstoff-Sharing-Modus durch einen Prozess betrieben wird, umfassend: Umschalten des Motors in den Kraftstoff-Sharing-Modus, Bestimmen des Anteils an in dem Kraftstoff-Sharing-Modus verbranntem Gas, Berechnen der Menge an in dem Kraftstoff-Sharing-Modus verbrauchtem Gas, und Bereitstellen einer Rückmeldung über den Zustand des Motors in dem Kraftstoff-Sharing-Modus.

3. Motorbetriebsverfahren nach Anspruch 1, wobei das Gasmanagementsystem die in dem Gasmodus betriebenen Motoren zwangsweise in den Heizölmodus oder den Kraftstoff-Sharing-Modus umschaltet, wenn der Innendruck des Lagertanks abnimmt, und überschüssiges Boil-Off-Gas zu einer Gasverbrennungseinheit zur Verbrennung sendet oder überschüssiges Boil-Off-Gas entlüftet, wenn der Innendruck des Lagertanks ansteigt.

4. Motorbetriebsverfahren nach Anspruch 1, wobei das integrierte Automatisierungssystem jedem Motor basierend auf Informationen über die Gesamtlasten, die Motoren in dem Gasmodus und Motoren in dem Kraftstoff-Sharing-Modus zuordenbar sind, die von dem Gasmanagementsystem basierend auf dem Innendruck eines Lagertanks berechnet werden, automatisch eine Last zuordnet.

5. Motorbetriebsverfahren nach Anspruch 1, wobei das Energiemanagementsystem in dem Nur-Kraftstoff-Sharing-Modus betrieben wird, und das Gasmanagementsystem (a) eine Menge an Boil-Off-Gas bestimmt, von der erwartet wird, dass sie basierend auf dem gemessenen Druck des Boil-Off-Gases in dem Lagertank als Kraftstoff verwendet wird, und die maximale Last berechnet, die beim Betreiben der Motoren in dem Kraftstoff-Sharing-Modus unter Verwendung einer bestimmten Menge an Boil-Off-Gas erhalten werden kann (hierin nachfolgend "maximale Motorlast auf Boil-Off-Gas-Basis"), (b) eine "jedem Motor zugeordnete Last auf Boil-Off-Gas-Basis" berechnet, indem die in (a) berechnete "maximale Motorlast auf Boil-Off-Gas-Basis" durch die "Gesamtanzahl von Motoren" dividiert wird, (c) ein Verhältnis von Erdgas zu Heizöl für jeden Motor basierend auf der in (b) berechneten "jedem Motor zugeordneten Last auf Boil-Off-Gas-Basis" bestimmt, (d) jeden Motor so betreibt, dass Heizöl und Boil-Off-Gas in dem Lagertank als Kraftstoff gemäß dem in (c) bestimmten Verhältnis verwendet werden, und (e) die Prozedur von (a) bis (d) basierend auf einem geänderten Druck wiederholt, wenn der Druck des Boil-Off-Gases in dem Lagertank während des Betriebs jedes Motors geändert wird.

6. Motorbetriebsverfahren nach Anspruch 1, wobei das Energiemanagementsystem in dem zweiten Mischmodus betrieben wird, und das Gasmanagementsystem (a) eine Menge an Boil-Off-Gas bestimmt, von der erwartet wird, dass sie basierend auf dem gemessenen Druck des Boil-Off-Gases in dem Lagertank als Kraftstoff verwendet wird, und die maximale Last berechnet, die beim Betreiben der Motoren in dem Kraftstoff-Sharing-Modus und der Motoren in dem Gasmodus unter Verwendung einer bestimmten Menge an Boil-Off-Gas erhalten werden kann (hierin nachfolgend "maximale Motorlast auf Boil-Off-Gas-Basis"), (b) die in (a) berechnete "maximale Motorlast auf Boil-Off-Gas-Basis" auf die Motoren in dem Gasmodus verteilt, (c) eine "jedem der Motoren in dem Kraftstoff-Sharing-Modus zugeordnete Last auf Boil-Off-Gas-Basis" durch Dividieren der "maximalen Motorlast auf Boil-Off-Gas-Basis" ohne die Last, die auf die Motoren in dem Gasmodus in (b) verteilt wird, durch die "Anzahl von Motoren in dem Kraftstoff-Sharing-Modus" berechnet, (d) ein Verhältnis von Erdgas zu Heizöl für jeden der Motoren in dem Kraftstoff-Sharing-Modus basierend auf der in (c) berechneten "jedem der Motoren in dem Kraftstoff-Sharing-Modus zugeordneten Last auf Boil-Off-Gas-Basis" bestimmt, (e) jeden Motor so betreibt, dass Heizöl und Boil-Off-Gas in dem Lagertank als Kraftstoff gemäß der Last, welche die Motoren in dem in (b) bestimmten Gasmodus erfüllen, und dem in (d) bestimmten Verhältnis von Erdgas zu Heizöl für jeden der Motoren in dem Kraftstoff-Sharing-Modus verwendet werden, (f) die Prozedur von (a) bis (e) basierend auf einem geänderten Druck wiederholt, wenn der Druck des Boil-Off-Gases in dem Lagertank während des Betriebs jedes Motors geändert wird, (g) den Anteil an Heizöl für die Motoren in dem Kraftstoff-Sharing-Modus erhöht, wenn die Menge an Boil-Off-Gas in dem Lagertank verringert wird, und einige oder alle der Motoren in dem Gasmodus in den Kraftstoff-Sharing-Modus umschaltet, wenn Heizöl oberhalb eines bestimmten Niveaus erforderlich ist.

7. Motorbetriebsverfahren nach Anspruch 1, wobei das Energiemanagementsystem in dem dritten Mischmodus betrieben wird und das Gasmanagementsystem (a) eine Menge an Boil-Off-Gas bestimmt, von der erwartet wird, dass sie basierend auf dem gemessenen Druck des Boil-Off-Gases in dem Lagertank als Kraftstoff verwendet wird, und die maximale Last berechnet, die beim Betreiben der Motoren in dem Kraftstoff-Sharing-Modus unter Verwendung einer bestimmten Menge an Boil-Off-Gas erhalten werden kann (hierin nachfolgend "maximale Motorlast auf Boil-Off-Gas-Basis"), (b) eine "jedem der Motoren in dem Kraftstoff-Sharing-Modus zugeordnete Last auf Boil-Off-Gas-Basis" durch Dividieren der in (a) berechneten "maximalen Motorlast auf Boil-Off-Gas-Basis" durch die "Gesamtanzahl von Motoren in dem Kraftstoff-Sharing-Modus" berechnet, (c) ein Verhältnis von Erdgas zu Heizöl für jeden der Motoren in dem Kraftstoff-Sharing-Modus basierend auf der in (b) berechneten "jedem der Motoren in dem Kraftstoff-Sharing-Modus zugeordneten Last auf Boil-Off-Gas-Basis" bestimmt, (d) eine für das Schiff erforderliche Motorleistung ohne die den Motoren in dem Kraftstoff-Sharing-Modus zugeordnete Last Motoren in dem Heizölmodus zuordnet, (e) jeden Motor so betreibt, dass Heizöl und Boil-Off-Gas in dem Lagertank als Kraftstoff gemäß dem in (c) bestimmten Verhältnis von Erdgas zu Heizöl für jeden der Motoren in dem Kraftstoff-Sharing-Modus und der in (d) bestimmten Last, die den Motoren in dem Heizölmodus zugeordnet ist, verwendet werden, und (f) die Prozedur von (a) bis (e) basierend auf einem geänderten Druck wiederholt, wenn der Druck des Boil-Off-Gases in dem Lagertank während des Betriebs jedes Motors geändert wird.

8. Motorbetriebsverfahren nach Anspruch 1, wobei jeder der Motoren von einem das Schiff betreibenden Benutzer manuell betrieben wird, und
wobei, wenn Boil-Off-Gas in dem Lagertank ausreicht, um den Motor anzutreiben, der Benutzer persönlich einen Punkt bestimmt, an dem ein optimaler Wirkungsgrad innerhalb eines Bereichs einer Boil-Off-Gas-Menge erreicht werden kann, die durch das Energiemanagementsystem (PMS) und das Gasmanagementsystem (GMS) zulässig ist, und wenn das Boil-Off-Gas in dem Lagertank nicht ausreicht, um den Motor anzutreiben, der Benutzer persönlich einen Punkt bestimmt, an dem ein optimaler Wirkungsgrad in dem Maße erreicht werden kann, wie ein Betriebsverfahren zum zwangsweisen Verdampfen von Flüssigerdgas in dem Lagertank beibehalten wird.

9. Motorbetriebsverfahren nach Anspruch 1, wobei, wenn jeder der Motoren in dem Kraftstoff-Sharing-Modus betrieben wird, eine Last des Motors zu 15 % oder mehr und 85 % oder weniger der Gesamtlast des Motors bestimmt wird.

10. Motorbetriebsverfahren nach Anspruch 1, wobei, wenn jeder der Motoren in dem Kraftstoff-Sharing-Modus betrieben wird, bestimmt wird, dass ein Anteil einer Last auf Gasbasis an einer Last des Motors 15 % oder mehr und 85 % oder weniger der Last des Motors beträgt.

11. Motorbetriebsverfahren nach Anspruch 1, wobei jeder der Motoren in dem Kraftstoff-Sharing-Modus betrieben wird, und bei einem Ansteigen einer Last des Motors der maximale Anteil einer Last auf Gasbasis an der Last des Motors ansteigt und der minimale Anteil einer Last auf Gasbasis an der Last des Motors abnimmt.

12. Motorbetriebsverfahren nach Anspruch 1, wobei das Schiff mehrere Motoren umfasst und eine Last jedes einzelnen Motors maximiert wird, um die Anzahl von Motoren zu minimieren, die anzutreiben sind.

13. Motorbetriebsverfahren nach Anspruch 1, wobei die jeweiligen "Motorlasten auf Gasbasis" von Motoren in dem Gasmodus und Motoren in dem Kraftstoff-Sharing-Modus die gleichen sind.

14. Motorbetriebsverfahren nach Anspruch 1, wobei die jeweiligen Lasten von Motoren in dem Gasmodus die gleichen sind und die jeweiligen Lasten von Motoren in dem Kraftstoff-Sharing-Modus die gleichen sind.

15. Motorbetriebsverfahren nach einem der Ansprüche 1 bis 14, wobei jeder der Motoren ein Viertakt-DF-Motor zur Energieerzeugung ist.

## Revendications

1. Procédé de fonctionnement de moteur pour un navire doté de moteurs pouvant fonctionner à l'aide de gaz naturel et de fioul en même temps, dans lequel chacun des moteurs est actionné selon l'un quelconque parmi un mode gaz dans lequel chacun des moteurs est entraîné en utilisant du gaz naturel en tant que combustible, un mode fioul dans lequel chacun des moteurs est entraîné en utilisant du fioul en tant que combustible et un mode partage de combustible dans lequel chacun des moteurs est entraîné en utilisant du gaz naturel et du fioul en même temps,
dans lequel le procédé de fonctionnement de moteur est déterminé par un système de gestion de puissance et un système de gestion de gaz d'un système d'automatisation intégré actionné conjointement l'un avec l'autre, le système de gestion de puissance étant actionné dans l'un quelconque parmi un mode diesel dans lequel une pluralité de moteurs du navire sont tous dans le mode fioul, un premier mode mixte dans lequel certains de la pluralité de moteurs sont dans le mode fioul et certains autres moteurs sont en mode gaz, un mode gaz unique dans lequel la pluralité de moteur sont tous en mode gaz, un mode partage de combustible unique dans lequel la pluralité de moteurs sont tous dans le mode partage de combustible, un deuxième mode mixte dans lequel certains de la pluralité de moteurs sont dans le mode partage de combustible et certains autres moteurs sont en mode gaz, et un troisième mode mixte dans lequel certains de la pluralité de moteurs sont en mode partage de combustible et certains autres moteurs sont en mode fioul,
dans lequel le système de gestion de gaz mesure une pression interne d'un réservoir de stockage de gaz naturel liquéfié prévu sur le navire et calcule une charge totale attribuable aux moteurs en mode gaz ou une proportion d'une charge à base de gaz parmi la charge totale attribuable aux moteurs dans le mode partage de combustible sur la base de la pression interne mesurée du réservoir de stockage, et
dans lequel le système de gestion de puissance est actionné dans le deuxième mode mixte, et le nombre de moteurs dans le mode gaz est maximisé et le nombre de moteurs dans le mode partage de combustible est minimisé,
**caractérisé en ce que** le procédé comprend les étapes suivantes :
(a) calculer une « charge de moteur à base de gaz totale » sur la base d'une pression d'un gaz d'évaporation dans le réservoir de stockage ;
(b) calculer une « charge de moteur à base de fioul totale » en soustrayant la « charge de moteur à base de gaz totale » calculée dans (a) de la sortie de moteur nécessaire pour le navire ;
(c) déterminer le nombre de moteurs du navire à entraîner en prenant en compte la sortie de moteur nécessaire pour le navire et la sortie maximum de chaque moteur (ci-après « le nombre de moteurs en fonctionnement ») ;
(d) déterminer une « charge de moteur à base de gaz » attribuée à chaque moteur en divisant la « charge de moteur à base de gaz totale » calculée dans (a) par le « nombre de moteurs en fonctionnement » calculé dans (c) ; et
(e) déterminer le nombre de moteurs qui partagent la « charge de moteur à base de fioul totale » calculée dans (b) en prenant en compte la charge maximum de chaque moteur.

2. Procédé de fonctionnement de moteur selon la revendication 1, dans lequel chacun des moteurs est actionné dans le mode partage de combustible par un processus comprenant les étapes suivantes : commuter le moteur sur le mode partage de combustible ; déterminer la proportion du gaz brûlé dans le mode partage de combustible ; calculer la quantité de gaz consommé dans le mode partage de combustible ; et fournir la rétroaction concernant l'état du moteur dans le mode partage de combustible.

3. Procédé de fonctionnement de moteur selon la revendication 1, dans lequel le système de gestion de gaz commute de force les moteurs fonctionnant dans le mode gaz dans le mode fioul ou le mode partage de combustible si la pression interne du réservoir de stockage diminue, et envoie le gaz d'évaporation en surplus à une unité de combustion de gaz pour la combustion ou évacue le gaz d'évaporation en surplus si la pression interne du réservoir de stockage augmente.

4. Procédé de fonctionnement de moteur selon la revendication 1, dans lequel le système d'automatisation intégré attribue automatiquement une charge à chaque moteur sur la base de l'information concernant les charges totales attribuables aux moteurs dans le mode gaz et les moteurs dans le mode partage de combustible calculées par le système de gestion de gaz sur la base de la pression interne d'un réservoir de stockage.

5. Procédé de fonctionnement de moteur selon la revendication 1, dans lequel le système de gestion de puissance est actionné en mode partage de combustible unique, et le système de gestion de gaz (a) détermine une quantité de gaz d'évaporation que l'on s'attend à utiliser en tant que combustible sur la base de la pression mesurée du gaz d'évaporation dans le réservoir de stockage et calcule la charge maximum pouvant être obtenue lors du fonctionnement des moteurs dans le mode partage de combustible en utilisant une quantité déterminée de gaz d'évaporation (ci-après, « charge de moteur sur la base du gaz d'évaporation maximum ») ; (b) calcule une « charge sur la base du gaz d'évaporation attribuée à chaque moteur » en divisant la « charge de moteur sur la base du gaz d'évaporation maximum », calculée dans (a), par le « nombre total de moteurs » ; (c) détermine un rapport de gaz naturel sur fioul pour chaque moteur sur la base de la « charge basée sur le gaz d'évaporation attribuée à chaque moteur » calculée dans (b) ; (d) actionne chaque moteur de sorte que le fioul et le gaz d'évaporation dans le réservoir de stockage sont utilisés en tant que combustible selon le rapport déterminé dans (c) ; et (e) répète la procédure de (a) à (d) basée sur une pression modifiée si la pression de gaz d'évaporation dans le réservoir de stockage est modifiée pendant le fonctionnement de chaque moteur.

6. Procédé de fonctionnement de moteur selon la revendication 1, dans lequel le système de gestion de puissance est actionné dans le deuxième mode mixte, et le système de gestion de gaz (a) détermine une quantité de gaz d'évaporation que l'on s'attend à utiliser en tant que combustible sur la base de pression mesurée de gaz d'évaporation dans le stockage et calcule la charge maximum pouvant être obtenue lors du fonctionnement des moteurs dans le mode partage de combustible et les moteurs dans le mode gaz en utilisant une quantité déterminée de gaz d'évaporation (ci-après « charge de moteur basée sur le gaz d'évaporation maximum ») ; (b) distribue la « charge de moteur basée sur le gaz d'évaporation maximum » calculée dans (a) aux moteurs dans le mode gaz ; (c) calcule une « charge basée sur le gaz d'évaporation attribuée à chacun des moteurs dans le mode partage de combustible » en divisant la « charge de moteur basée sur le gaz d'évaporation maximum » excluant la charge distribuée aux moteurs dans le mode gaz dans (b) par le « nombre de moteurs dans le mode partage de combustible » ; (d) détermine un rapport de gaz naturel sur fioul pour chacun des moteurs dans le mode partage de combustible sur la base de la « charge basée sur le gaz d'évaporation attribuée à chacun des moteurs dans le mode partage de combustible » calculé dans (c) ; (e) actionne chaque moteur de sorte que le fioul et le gaz d'évaporation dans le réservoir de stockage sont utilisés en tant que combustible selon la charge rencontrée par les moteurs dans le mode gaz, déterminée dans (b), et le rapport de gaz naturel sur fioul pour chacun des moteurs dans le mode partage de combustible déterminée dans (d) ; (f) répète la procédure de (a) à (e) sur la base d'une pression modifiée sur la pression de gaz d'évaporation dans le réservoir de stockage est modifiée pendant le fonctionnement de chaque moteur ; (g) augmente la proportion du fioul pour les moteurs dans le mode partage de combustible si la quantité de gaz d'évaporation dans le réservoir de stockage est réduite, et commute certains ou la totalité des moteurs en mode gaz dans le mode partage de combustible si le fioul est requis au-dessus d'un certain niveau.

7. Procédé de fonctionnement de moteur selon la revendication 1, dans lequel le système de gestion de puissance est actionné dans le troisième mode mixte et le système de gestion de gaz (a) détermine une quantité de gaz d'évaporation que l'on s'attend à utiliser en tant que combustible sur la base de la pression mesurée de gaz d'évaporation dans le réservoir de stockage et calcule la charge maximum pouvant être obtenue lors du fonctionnement des moteurs dans le mode partage de combustible en utilisant une quantité déterminée de gaz d'évaporation (ci-après, « charge de moteur basée sur le gaz d'évaporation maximum ») ; (b) calcule une charge basée sur le gaz d'évaporation attribuée à chacun des moteurs dans le mode partage de combustible » en divisant la « charge de moteur basée sur le gaz d'évaporation maximum », calculée dans (a), par le « nombre total de moteurs dans le mode partage de combustible » ; (c) détermine un rapport de gaz naturel sur fioul pour chacun des moteurs dans le mode partage de combustible sur la base de la « charge basée sur le gaz d'évaporation attribuée à chacun des moteurs dans le mode partage de combustible » calculée dans (b) ; (d) attribue une sortie de moteur nécessaire pour le navire, excluant la charge attribuée aux moteurs dans le mode partage de combustible, aux moteurs dans le mode fioul ; (e) actionne chaque moteur de sorte que le fioul et le gaz d'évaporation dans le réservoir de stockage sont utilisés en tant que combustible selon le rapport de gaz naturel sur fioul pour chacun des moteurs dans le mode partage de combustible, déterminée dans (c) et la charge attribuée aux moteurs dans le mode fioul, déterminée dans (d) ; et (f) répète la procédure de (a) à (e) basée sur une pression modifiée si la pression du gaz d'évaporation dans le réservoir de stockage est modifiée pendant le fonctionnement de chaque moteur.

8. Procédé de fonctionnement de moteur selon la revendication 1, dans lequel chacun des moteurs est actionné manuellement par un utilisateur faisant fonctionner le navire, et
dans lequel, si le gaz d'évaporation dans le réservoir de stockage est suffisant pour entraîner le moteur, l'utilisateur détermine personnellement un point auquel l'efficacité optimale peut être obtenue dans une plage de quantité de gaz d'évaporation attribuable par le système de gestion de puissance (PMS) et le système de gestion de gaz (GMS), et si le gaz d'évaporation dans le réservoir de stockage n'est pas suffisant pour entraîner le moteur, l'utilisateur détermine personnellement un point auquel l'efficacité optimale peut être obtenue dans la mesure où un procédé de fonctionnement pour vaporiser de force le gaz naturel liquéfié dans le réservoir de stockage est maintenu.

9. Procédé de fonctionnement de moteur selon la revendication 1, dans lequel lorsque chacun des moteurs est actionné dans le mode partage de combustible, une charge du moteur est déterminée pour être de 15% ou plus et 85% ou moins d'une charge totale du moteur.

10. Procédé de fonctionnement de moteur selon la revendication 1, dans lequel lorsque chacun des moteurs fonctionnent dans le mode partage de combustible, la proportion d'une charge basée sur le gaz parmi une charge du moteur est déterminée pour être de 15% ou plus et 85% ou moins de la charge du moteur.

11. Procédé de fonctionnement de moteur selon la revendication 1, dans lequel chacun des moteurs est actionné dans le mode partage de combustible et lorsqu'une charge du moteur augmente, la proportion maximum d'une charge basée sur le gaz parmi la charge du moteur augmente et la proportion minimum d'une charge basée sur le gaz parmi la charge du moteur diminue.

12. Procédé de fonctionnement de moteur selon la revendication 1, dans lequel le navire comprend une pluralité de moteurs et une charge de chaque moteur individuel est maximisée pour minimiser le nombre de moteurs à entraîner.

13. Procédé de fonctionnement de moteur selon la revendication 1, dans lequel les « charges de moteur basées sur le gaz » respectives des moteurs dans le mode gaz et des moteurs dans le mode partage de combustible sont les mêmes.

14. Procédé de fonctionnement de moteur selon la revendication 1, dans lequel les charges respectives des moteurs dans le mode gaz sont les mêmes et les charges respectives des moteurs dans le mode partage de combustible sont les mêmes.

15. Procédé de fonctionnement de moteur selon l'une quelconque des revendications 1 à 14, dans lequel chacun des moteurs est un moteur DF à quatre temps pour la génération de puissance.
